# FASCICULE DE BREVET EUROPEEN

(11) **EP 0 481 972 B1**
(45) Date de publication et mention de la délivrance du brevet: **13.09.1995**
(21) Numéro de dépôt: 89904082.8
(22) Date de dépôt: 24.03.1989
(51) Int. Cl.: F02B 29/06, F02B 25/26

(54) **DISPOSITIF D'ALIMENTATION EN AIR D'UN CYLINDRE D'UN MOTEUR DEUX TEMPS AUTOSURALIMENTE A AU MOINS UN GROUPE DE DEUX CYLINDRES CALES A 180o**
VORRICHTUNG ZUR LUFTEINSPEISUNG IN DEN ZYLINDER EINES SELBSTAUFGELADENEN ZWEITAKTMOTORS MIT MINDESTENS EINER GRUPPE VON ZWEI UM 180 GRADE TAKTVERSCHOBENEN ZYLINDERN
DEVICE FOR SUPPLYING AIR TO A SUPERCHARGED TWO-STROKE ENGINE WITH AT LEAST ONE SET OF TWO CYLINDERS ARRANGED AT 180o

(30) Priorité: 25.03.1988 FR 8804003
(43) Date de publication de la demande: 29.04.1992
(73) Titulaire: CURTIL, Rémi, F-75017 Paris (FR)
(72) Inventeur: CURTIL, Rémi, F-75017 Paris (FR)
(74) Mandataire: Michardière, Bernard
(86) Numéro de dépôt international: FR8900138
(87) Numéro de publication internationale: WO8909329

(56) Documents cités:
- CH-A- 593 420
- FR-A- 2 244 910
- FR-A- 2 319 768
- US-A- 2 446 094

## Description

La présente invention concerne un dispositif d'alimentation en air d'un cylindre d'un moteur à combustion interne à deux temps, à au moins un groupe de deux cylindres calés à 180° à autosuralimentation (voir FR-A-2319768).

Plus particulièrement, la présente invention concerne un dispositif d'alimentation en air d'un cylindre d'un moteur à combustion interne à deux temps, à au moins un groupe de deux cylindres calés à 180°, à autosuralimentation par effet de post-remplissage où l'énergie des gaz d'échappement d'un cylindre de ce groupe sert à la suralimentation de l'autre cylindre de ce même groupe par un conduit d'autosuralimentation relient les lumières d'admission des deux cylindres du même groupe, les lumières d'admission étant découvertes par le piston plus longtemps que les lumières d'échappement.

Dans l'état de la technique antérieure, on connaît déjà un grand nombre de propositions visant à utiliser l'action directe des gaz sortant d'un cylindre sur une réserve d'air en vue de la comprimer et de l'introduire dans un cylindre à un moment opportun du cycle pour le suralimenter.

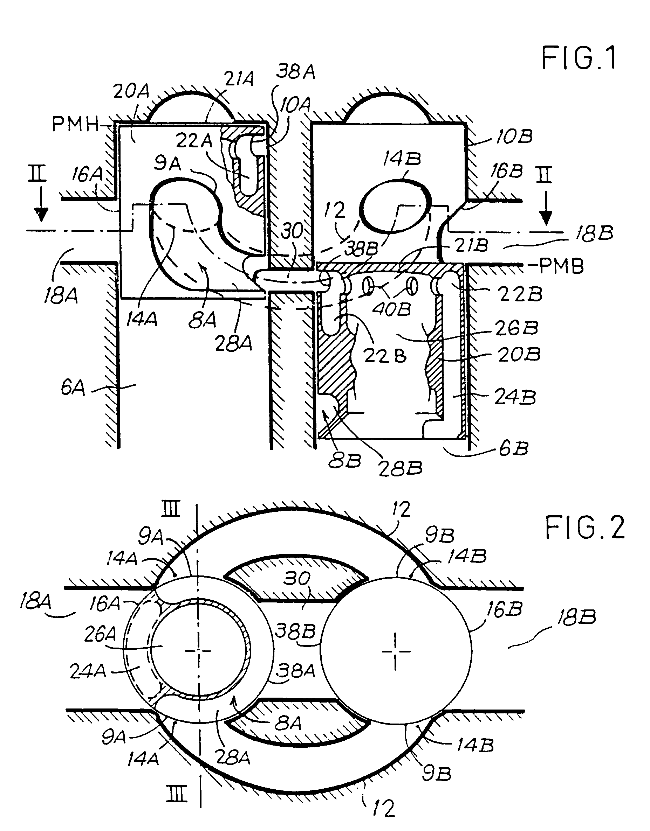

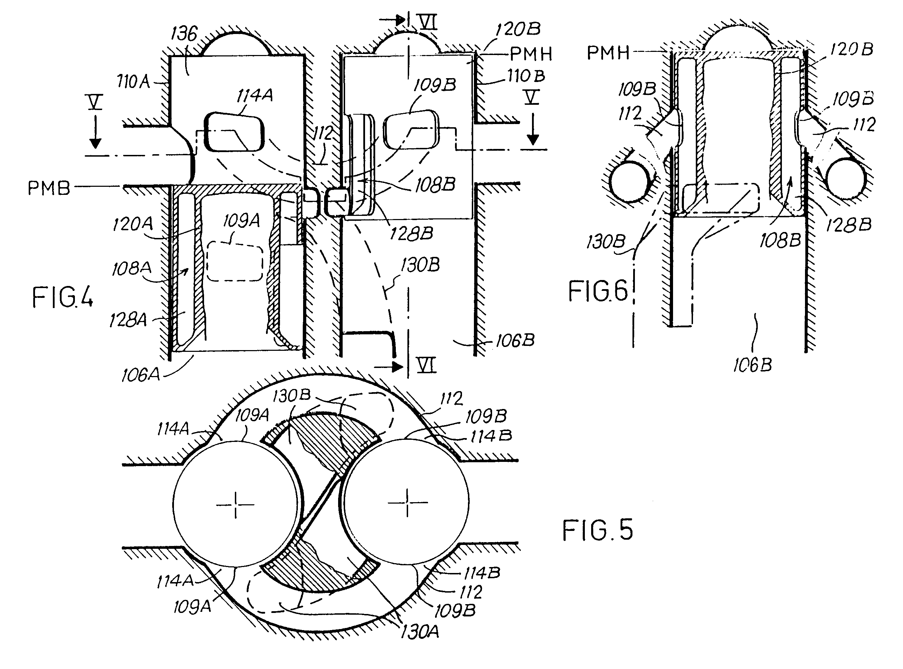

On a déjà décrit dans le document CH-A-593 420 des solutions de ce type selon lesquelles le conduit d'alimentation 9 constitue la seule voie d'admission en air dans le cylindre vie une ouverture 2,12 ménagée dans la jupe du piston de l'autre cylindre en communication avec le conduit d'alimentation 9 lorsque cet autre piston est au voisinage du point mort haut (voir figure 1 et figure 4).

Les solutions décrites dans ce document CH-A-593 420 sont particulièrement intéressantes pour l'obtention d'un effet de post-remplissage, en particulier pour les moteurs deux temps.

En effet, pour un travail de compression externe donné de la charge d'air, on obtient un remplissage le plus élevé possible grâce à une augmentation de la pureté en air du fait que la masse de gaz résiduels non expulsée à la fin de la phase de balayage ne subit plus de modification ultérieure durant la phase de post-remplissage. Ceci équivaut à une amélioration du rendement de balayage et à une meilleure utilisation de l'air de balayage.

Cependant, les solutions préconisées par le document CH-A-593 420 aboutissent à un autobalayage favorable mais qui présente des insuffisances dans l'alimentation en air dans certaines conditions de fonctionnement du moteur, notamment au démarrage ou dans le ces de la présence d'une contrepression élevée à l'échappement. En outre, ces solutions exigent une construction spéciale de la combinaison bicylindre, relativement complexe, augmentant l'entraxe global des deux cylindres calés à 180° du même groupe. Par ailleurs, on pourrait envisager une amélioration de l'alimentation en air par l'utilisation d'une pompe de balayage auxiliaire au moteur mais ceci complique grandement la construction.

La présente invention a donc pour but de remédier à ces inconvénients majeurs qui ont grandement limité l'exploitation industrielle du dispositif et du procédé préconisés dans ce document.

A cet effet, la présente invention a pour but principal de résoudre le nouveau problème technique consistant en la fourniture d'un dispositif d'alimentation en air de chaque cylindre d'un moteur à combustion interne à deux temps, à au moins un groupe de deux cylindres calés à 180°, à autosuralimentation par effet de post-remplissage, qui garantissent l'alimentation en air quelles que soient les conditions de fonctionnement du moteur, notamment au démarrage, et qui utilise. le mouvement naturel de chaque piston pour transférer positivement l'air à travers le conduit d'autosuralimentation en dépit du fait que le piston se trouve autour du point mort haut, c'est-à-dire dans la position inverse de celle qui permet de constituer un effet de pompage de l'air d'alimentation, au moment où l'air d'alimentation pénètre en amont du conduit d'autosuralimentation, tout en conservant un entraxe minimal de chacun des deux cylindres calés à 180° du même groupe.

Ce nouveau problème technique est résolu pour la première fois par la présente invention, de manière satisfaisante, utilisable à l'échelon industriel, au moyen d'un dispositif selon la revendication 1.

Selon un mode de réalisation particulier, ce dispositif est caractérisé en ce qu'il comprend un piston étagé de sorte que les moyens de transit et la pompe volumétrique précitée sont confondus et sont intégrés au piston du cylindre associé au cylindre en phase de balayage. Ce piston étagé aspire l'air d'admission depuis l'extérieur lorsque le piston descend vers le point mort bas et refoule l'air dans le conduit d'autosuralimentation lorsque le piston se trouve au voisinage de son point mort haut.

Selon un autre mode de réalisation particulier , ce dispositif est caractérisé en ce que la pompe volumétrique précitée est constituée par le carter-pompe du cylindre se trouvant en phase de balayage.

Selon une variante de réalisation avantageuse, ce dispositif est caractérisé en ce que les moyens de transit précités du piston du cylindre associé communiquent par intermittence en amont avec le carter-pompe du cylindre en phase de balayage par au moins un canal de transfert situé au-dessous du point mort bas.

Selon une variante de réalisation particulière, chaque canal de transfert précité sert à alimenter en air successivement chacun des deux cylindres associés.

Selon un mode de réalisation particulièrement avantageux du dispositif selon l'invention, les moyens de transit précités comprennent une chambre de transit définie soit par une cavité interne au piston , soit par au moins un évidement réalisé dans la masse du piston entre le piston et le cylindre, reliée par intermittence en amont avec le carter-pompe et en aval avec le conduit d'autosuralimentation.

Selon une autre variante de réalisation particulièrement avantageuse du dispositif selon l'invention, celui-ci est caractérisé en ce qu'il comprend une cavité d'alimentation en air d'admission réalisée interne au piston communiquant en amont avec l'espace sous piston défini par le carter-pompe et débouchant en aval sur la jupe du piston par une lumière ménagée dans la jupe du piston, cette lumière étant mise en communication par intermittence, à travers le canal de transfert précité, avec les moyens de transit d'air de l'autre piston associé par le mouvement naturel de chaque piston dans son cylindre. De préférence, cette cavité d'alimentation est réalisée annulaire sous la tête du piston le piston précité comprend en outre un conduit d'amenée d'air vertical depuis l'espace sous piston, ménagé interne au piston dans un secteur annulaire diamétralement opposé au canal de transfert central, et reliant l'espace sous piston avec la cavité précitée. Selon une variante de réalisation, l'espace défini autour du logement de la bielle ou de la tige de piston qui s'étend avantageusement jusque sous le tête du piston communique en aval par des lumières avec la cavité annulaire précitée s'étendent elle-même sous la tête du piston.

Selon encore une autre caractéristique particulièrement avantageuse du dispositif selon l'invention, l'ensemble de chaque groupe de deux cylindres-pistons celés à 180° est disposé symétriquement par rapport au plan de symétrie longitudinal passant par les axes des deux cylindres.

Selon un autre mode de réalisation du dispositif selon l'invention, celui-ci comprend deux canaux de transfert croisés relient chacun en amont en permanence respectivement l'espace sous piston avec, en aval, par intermittence, les moyens de transit du piston du cylindre associé.

Selon encore une autre variante de réalisation, chaque piston est réalisé essentiellement parfaitement cylindrique.

Selon encore un mode de réalisation particulier du dispositif selon l'invention, celui-ci est caractérisé en ce que le rapport du grand diamètre de chaque piston étagé à son petit diamètre présente une valeur supérieure à √2.

Selon encore un autre mode de réalisation avantageux du dispositif selon l'invention, dans lequel le moteur est équipé d'un turbo-compresseur externe, celui-ci est caractérisé en ce que le rapport du grand diamètre de chaque piston étagé à son petit diamètre est réduit à la valeur minimale nécessaire pour assurer un fonctionnement correct au démarrage et aux faibles charges.

On comprendra qu'ainsi avec le dispositif selon l'invention, la pompe volumétrique est constituée directement par le volume variable engendré par le mouvement du piston constitué généralement par le carter pompe lui-même ou dans le cas d'un moteur à crosse par l'espace délimité par le dessous du piston et l'étanchéité de la tige du piston.

Le dispositif selon l'invention garantit l'alimentation en air quelles que soient les conditions de fonctionnement du moteur, notamment au démarrage.

En outre, ceci est assuré d'une manière extrêmement simple, avec un faible coût de fabrication, en utilisant les mouvements naturels de chaque piston de manière qu'ils constituent une pompe volumétrique.

D'autres buts, caractéristiques et avantages de l'invention apparaîtront plus clairement à la lumière de la description explicative qui va suivre faite en référence aux dessins annexés, représentant plusieurs modes de réalisation actuellement préférés de l'invention donnés simplement à titre d'illustration et qui ne sauraient donc en aucune façon limiter la portée de l'invention. Dans les dessins :
- la figure 1 est une vue en coupe axiale longitudinale d'un moteur à combustion interne à deux temps, à au moins un groupe de deux cylindres calés à 180°, à autosuralimentation par effet de post-remplissage, équipé d'un premier mode de réalisation davantage préféré d'un dispositif d'alimentation selon la présente invention, comportant au moins un canal de transfert, réduisant l'entre-axes des deux cylindres, la bielle ou la tige d'entraînement du piston ayant été enlevée pour faciliter la compréhension ;
- la figure 2 est une vue en coupe axiale transversale du moteur de la figure 1, selon la ligne de trace II-II de la figure 1 ;
- la figure 3 est une vue en coupe axiale selon la ligne de trace III-III de la figure 2, montrant en outre le carter pompe ;
- la figure 4 représente un deuxième mode de réalisation d'un dispositif d'alimentation en air selon l'invention, à canaux de transfert croisés et à moyens de transit constitués par une cavité interne au piston selon une vue en coupe similaire à celle de la figure 1 ;
- la figure 5 représente une vue en coupe axiale transversale, selon la ligne de trace V-V du dispositif de la figure 4 et met particulièrement en évidence les canaux de transfert croisés;
- la figure 6 représente une vue en coupe axiale selon la ligne de trace VI-VI de la figure 4 permettant de voir l'alimentation en air par le canal de transfert, en communication avec le conduit d'admission d'un cylindre par l'intermédiaire des moyens de transit constitués par une cavité interne au piston et par des lumières associées, lorsque le piston se trouve autour de son point mort haut ; et
- les figures 7a, 7b représentent un troisième mode de réalisation d'un dispositif selon l'invention avec un piston étagé alimentant directement les conduits d'autosuralimentation, les moyens de transit et la pompe volumétrique étant confondus. La demicoupe gauche représente le piston au point mort haut et la demicoupe droite le piston au point mort bas.

En référence eux figures 1 à 3, on a représenté un moteur à combustion interne à deux temps, à au moins un groupe de deux cylindres 10A, 10B calés à 180°, à autosuralimentation par effet de post-remplissage. Pour ce faire, ce moteur comprend un dispositif d'alimentation en air comprenant au moins un conduit d'autosuralimentation 12, relient les lumières d'admission 14A, 14B des deux cylindres 10A, 10B du même groupe. Les lumières d'admission 14A, 14B sont disposées dans le cylindre de manière à être découvertes plus longtemps par le piston que les lumières d'échappement 16A, 16B du conduit d'échappement 18A, 18B. Ce conduit d'autosuralimentation 12 constitue la seule voie d'admission en air dans le cylindre 10A ou 10B , se trouvant en phase de balayage .

En outre, des moyens de transit d'air d'admission 8A, 8B, sont ménagés à l'intérieur, ou sous, le piston 20A, 20B du cylindre associé se trouvant en phase de balayage, alimentés en amont par une source d'air d'admission au moins au moment où ce piston du cylindre associé se trouve autour du point mort haut (voir partie gauche de la figure 1) ; alors que les moyens de transit sont en communication (par des moyens tels que 9A) en aval avec le conduit d'autosuralimentation 12.

Selon l'invention, ce dispositif est caractérisé en ce qu'il comprend une pompe volumétrique définie par le mouvement naturel d'un piston entre son point mort haut et son point mort bas et inversement, reliée aux moyens de transit d'air d'admission 8A,8B , pour les alimenter en air.

Selon une variante de réalisation telle que représentée aux figures 1 à 3, la pompe volumétrique précitée est constituée par le carter-pompe du cylindre se trouvant en phase de balayage.

Selon un mode de réalisation particulièrement avantageux, tel que représenté aux figures 1 et 2, les moyens de transit 8A, 8B, comprennent une chambre de transit 28A, 28B, définie ici par un évidement 28A, 28B réalisé dans la masse du piston 20A, 20B, entre le piston 20A, 20B, et le cylindre 10A, 10B, reliée par intermittence en amont avec le carter-pompe ou espace au piston , ici 6B, 6A, et en aval avec le conduit d'autosuralimentation 12.

Selon une variante de réalisation avantageuse , les moyens de transit 8A, 8B du piston 20A, 20B du cylindre associé communiquent par intermittence en amont avec le carter-pompe du cylindre en phase de balayage (tel que 10B) par au moins un canal de transfert 30 situé au-dessous du point mort bas.

Il est clair que, comme cela est représenté à la partie droite de la figure 1, ce canal de transfert 30 n'est jamais mis en communication avec la chambre de travail du cylindre 10B, 10A.

On peut ainsi observer que l'alimentation en air des moyens de transit 8A, 8B et des conduits d'autosuralimentation 12 est réalisée lorsque l'évidement 28A, (28B) est simultanément en communication avec l'arrivée d'air en amont par le canal de transfert 30 débouchant par ses lumières 38A à hauteur de la partie inférieure de l'évidement 28A (28B) et tandis que la partie aval 9A (9B) de l'extrémité supérieure de l'évidement 28A (28B) est en coïncidence avec les lumières d'entrée 14A, 14B du conduit d'autosuralimentation 12.

Selon l'exemple de réalisation représenté aux figures 1 et 2, chaque canal de transfert 30 sert à alimenter en air successivement chacun des deux cylindres associés. Ceci signifie que l'air en provenance de chaque carter-pompe passe successivement en direction des moyens de transit du cylindre associé par ce canal de transfert qui est ainsi parcouru dans les deux sens par le flux d'air .

Selon une réalisation particulièrement avantageuse, telle que représentée aux figures 1 et 2, chaque cylindre 10A, 10B comprend au moins un groupe de deux conduits d'autosuralimentation 12 et les moyens de transit 8A, 8B alimentent symétriquement en air chaque groupe de conduits d'autosuralimentation 12, ce qui assure une alimentation idéale des conduits d'autosuralimentation 12.

Selon une variante de réalisation avantageuse de l'invention, le dispositif selon l'invention est caractérisé en ce que le piston 20A, 20B est réalisé tel qu'il communique en amont avec l'espace sous piston 6A, 6B constituant le carter-pompe, de façon permanente, tandis qu'il débouche en aval par intermittence sur la jupe du piston 20A, 20B par une lumière, telle que 38A, 38B, ménagée dans la jupe du piston, cette lumière, telle que 38B, venant en coïncidence avec le canal de transfert 30 lors de la phase de balayage du cylindre tel que 10B, c'est-à-dire lorsque le piston 20B se trouve autour de son point mort bas.

Selon une variante de réalisation particulièrement avantageuse, la communication permanente entre la lumière, telle que 388, et l'espace sous piston, tel que 6B, est réalisée à titre d'exemple par une cavité , telle que 22B, interne au piston , tel que 20B. De préférence, cette cavité , telle que 22B, est réalisée annulaire sous la tête, telle que 21B, du piston , tel que 20B.

Selon une variante de réalisation particulière de ce dispositif, chaque piston 20A, 20B, comprend en outre un conduit, tel que 24B, vertical d'amenée d'air depuis l'espace sous piston 6A, 6B, ménagé interne au piston, tel que 20B, relient l'espace sous piston 6A, 6B, avec la cavité, telle que 22B. Selon une variante de réalisation, l'espace, tel que 26B, défini autour du logement de le bielle ou de la tige de piston, qui s'étend avantageusement jusque sous la tête, telle que 21B du piston 20B, communique en aval par des lumières, telles que 40B, avec la cavité annulaire, telle que 22B, s'étendent elle-même sous la tête, telle que 21B, du piston 20B.

En outre, ce dispositif selon l'invention est caractérisé en ce que l'ensemble de chaque groupe de deux cylindres 10A, 10B - piston 20A, 20B, calés à 180°, est disposé symétriquement par rapport au plan de symétrie longitudinal passant par les axes des deux cylindres.

On observera en outre qu'avec le dispositif selon l'invention, on obtient ainsi, par l'utilisation du mouvement naturel du piston dans le cylindre, une pompe volumétrique constituée directement par l'espace 6A, 6B sous piston encore dénommé espace carter-pompe, situé sous chacun des pistons.

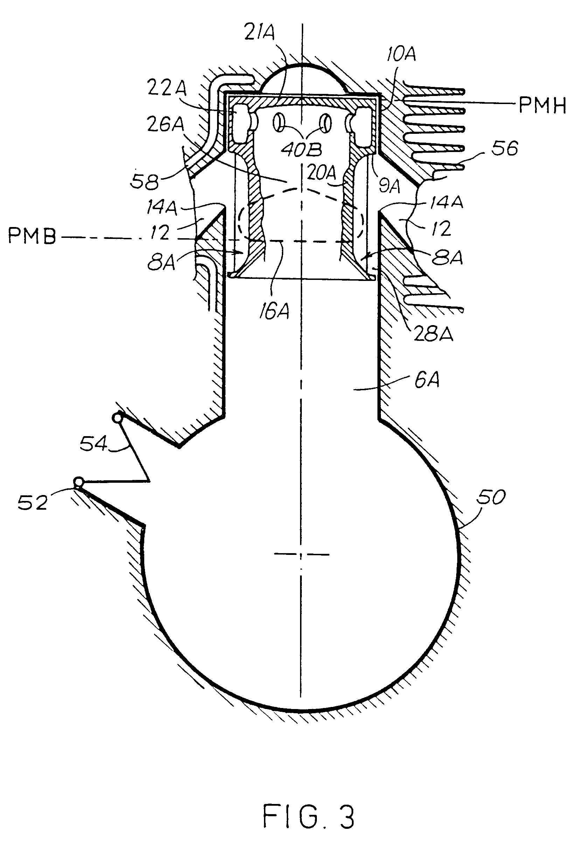

La figure 3 représente un exemple classique de carter pompe 50 pourvu d'un conduit 52 d'alimentation en air depuis l'extérieur, par l'intermédiaire d'un clapet antiretour 54. Une variante consisterait en ce que le conduit 52 débouche latéralement dans le cylindre A ou B, par l'intermédiaire d'une lumière découverte lorsque le piston est eu voisinage de son point mort haut. On a également représenté à la partie droite de le figure 3 des moyens de réfrigération sous forme d'ailettes 56, et à la partie gauche une autre variante de réalisation des moyens de réfrigération sous forme d'une chambre d'eau 58.

On obtient donc tous les avantages techniques déterminants précédemment énoncés. On observera en outre que ce dispositif permet le mise en oeuvre du procédé précédemment énoncé et que le fonctionnement est clairement apparent de la description précédente, pour un homme de l'art.

En référence aux figures 4 à 6, on a représenté un deuxième mode de réalisation du dispositif selon l'invention, pour lequel on a utilisé les mêmes numéros de référence qu'aux figures 1 à 3 pour les pièces remplissant une fonction identique, mais augmentés de 100.

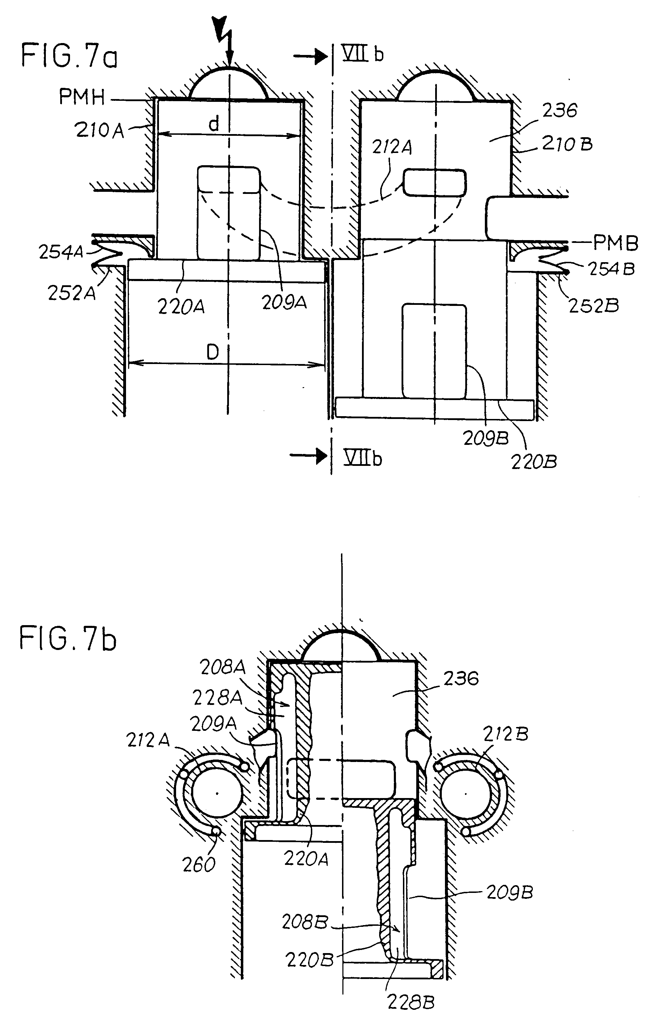

On observera que ce dispositif est ici caractérisé en ce qu'il comprend non plus un canal de transfert 30 servant successivement à chacun des cylindres comme dans le mode de réalisation des figures 1 et 2, mais deux canaux de transfert distincts et croisés 130B, 130A mettant chacun son tour en communication respectivement les chambres de transit 128A et 128B, constituant les moyens de transit d'air d'admission 108A, 108B, des pistons 120A, 120B avec les espaces sous piston 106A, 106B, constitués par les carters-pompes respectifs lorsque ceux-ci se trouvent respectivement au voisinage de leur point mort haut et de leur point mort bas. On remarquera que ces canaux de transfert croisés 130B, 130A sont, à l'inverse du mode de réalisation des figures 1 à 3, toujours parcourus dans le même sens par l'air d'admission provenant de l'un ou l'autre des carters-pompes. Ainsi, lorsque le piston 120B par exemple est au point mort haut, comme représenté aux figures 4 et 6, l'espace sous piston 106A est en communication avec la chambre de transit 128B par le canal de transfert 130A, tandis que la chambre de transit 128B communique à ce moment par la lumière 109B ménagée dans la jupe du piston 120B avec le conduit d'autosuralimentation 112 qui débouche sur la chambre de travail 136 par sa lumière d'admission 114A. On comprendra que, avec le dispositif selon l'invention, les chambres de transit peuvent être en communication par les canaux de transfert 130A ou 130B pendant des durées et périodes du cycle convenables. En tout cas, la durée de communication doit être suffisamment longue pour permettre d'assurer un balayage du conduit d'autosuralimentation 112, puis de la chambre de travail telle que 136 en phase de balayage.

En référence aux figures 7a, 7b, on a représenté un troisième mode de réalisation d'un dispositif selon l'invention, pour lequel on a également utilisé les mêmes numéros de référence pour les pièces identiques mais encore augmentés de 100. Selon ce mode de réalisation, le piston 220A, 220B du cylindre 210A, 210B est constitué par un piston étagé de manière à définir la chambre de transit 228A, 228B, constituant les moyens de transit d'air d'admission 208A, 208B, par une zone annulaire verticale en communication permanente avec l'espace pompe 206A, 206B engendré par le mouvement naturel du piston 220A, 220B et constituant lui-même la pompe volumétrique. Il est prévu de manière similaire à la figure 3 un conduit 252A, 252B d'alimentation en air depuis l'extérieur par l'intermédiaire d'un clapet antiretour tel que 254A. On comprend ainsi que le piston étagé 220A, 220B aspire l'air d'admission depuis l'extérieur lorsque ce piston descend vers le point mort bas comme représenté à la partie droite des figures 7a et 7b, et refoule l'air dans le conduit d'autosuralimentation 212A, 212B à travers la lumière 209A, 209B ménagée dans la jupe du piston tel que 220A lorsque le piston se trouve au voisinage de son point mort haut, comme représenté à lapartie gauche des figures 7a, 7b.

On comprendra que ce mode de réalisation des figures 7a et 7b, utilisant un piston étagé, entraîne la suppression descanaux de transfert (30, figures 1 à 3 ; et 130A, 130b, figures 4 à 6) puisque le piston étagé assure la fonction de pompe volumétrique lors de son mouvement vers le point mort haut pour le même cylindre comprenant la chambre de transit telle que 220A,en fonction.

Sur la figure 7b, on a également représenté des moyens de réfrigération, par exemple sous la forme de conduits tels que 260 forés, ou encore réalisés par moulage en fonderie, dans le cas d'un refroidissement par eau, technique connue par ailleurs sous le nom de "bore cooling", répartis autour du conduit d'autosuralimentation 212A, 212B comme représenté en coupe partielle selon la ligne de trace VIIb-VIIb de la figure 7a.

On notera que ce mode de réalisation des figures 7a et 7b, utilisant un piston étagé 220A, 220b, permet en outre par le choix approprié du rapport de son grand diamètre (D) à son petit diamètre (d) d'augmenter à volonté le débit d'air fourni par la pompe volumétrique. Ceci autorise un balayage complet, non seulement du conduit d'autosuralimentation 212A, 212B, mais également de la chambre de travail telle que 236. Le rapport précité D/d pourra notamment être supérieur à √2.

Enfin, on notera que la structure prévue par chacun des trois modes de réalisation des figures 1a à 7b, précités, ayant des pistons avec une cavité annulaire délimitée à l'extérieur par le haut de la juge de piston et à l'intérieur par les parois formant voûte conduisent les efforts à l'axe relatif du piston, confère à l'ensemble une axisymétrie thermique et mécanique. Cette axisymétrie permet de créer naturellement des conditions extrêmement favorables pour la réfrigération du piston et par voie de conséquence pour le choix des jeux de fonctionnement piston-chemise. Si le contrôle du refroidissement extérieur de la chemise lui confère aussi un refroidissement homogène et axisymétrique, il est alors possible de réaliser le piston essentiellement parfaitement cylindrique, ce qui constitue un avantage de fabrication considérable.

Par ailleurs, selon une variante de réalisation avantageuse du procédé de l'invention, on ne réfrigèrera pas le moteur aux faibles charges en interrompant le circuit de réfrigération du moteur, et notamment des voies d'alimentation incluant les conduits d'autosuralimentation, tandis que l'on réfrigère depuis les charges intermédiaires jusqu'à la charge maximale en ouvrant le circuit de réfrigération.

L'absence de réfrigération aux faibles charges permet d'élever la température de l'air d'admission grâce à son réchauffement par les parois des conduits d'autosuralimentation, eux-mêmes réchauffés par les gaz de pré-échappement.

L'élévation de température de l'air d'admission augmente leur volume et produit ainsi une diminution du volume des gaz d'échappement résiduels dans le cylindre, ce qui influence favorablement le seuil d'inflammabilité minimal du mélange air de balayage - gaz résiduels principalement dans le cas des moteurs à allumage commandé.

Dans chaque variante de réalisation, il est possible d'alimenter le moteur à autosuralimentation par effet de post-remplissable tel que décrit avec une suralimentation extérieure, par exemple par utilisation d'un turbo-compresseur, constituant l'étage basse pression et l'autosuralimentation par post-remplissage constituant alors le dernier étage haute pression.

Naturellement, dans ce cas le turbo-compresseur basse pression constitue non seulement un moyen d'élever la pression de balayage mais également un moyen, à partir d'un certain niveau de charge, de créer un différentiel de pression positif entre la pression d'admission et la pression d'échappement, de façon bien connue à l'homme de l'art.

Dans ce cas, où le moteur est équipé d'un turbo-compresseur extérieur, il est avantageux de réduire le rapport du grand diamètre (D) de chaque piston étagé relativement à son petit diamètre (d) au minimum nécessaire pour garantir le démarrage et le fonctionnement aux charges partielles avant que le balayage ne soit relayé par le turbo-compresseur. On remarque que ceci permet simultanément de réduire l'entraxe entre les cylindres.

## Revendications

1. Dispositif d'alimentation en air d'un cylindre d'un moteur à combustion interne à deux temps, à au moins un groupe de deux cylindres calés à 180°, à autosuralimentation, comprenant au moins un conduit d'autosuralimentation reliant les lumières d'admission des deux cylindres du même groupe, le conduit d'autosuralimentation constituant la seule voie d'admission en air dans le cylindre se trouvant en phase de balayage, des moyens de transit d'air d'admission étant ménagés à l'intérieur, ou sous, le piston du cylindre associé, alimentés en amont par une source d'air d'admission au moins au moment où ce piston du cylindre associé se trouve autour du point mort haut, alors que les moyens de transit sont en communication en aval avec le conduit d'autosuralimentation, et comprenant une pompe volumétrique définie par le mouvement naturel d'un piston entre son point mort haut et son point mort bas et inversement, reliée aux moyens de transit d'air d'admission (8A, 8B, ; 108A, 108B ; 208A, 208B) pour les alimenter en air, caractérisé par le fait que les lumières d'admission sont disposées dans le cylindre de manière à être découvertes plus longtemps par le piston que les lumières d'échappement pour assurer un effet de post-remplissage, qu'il comprend au moins un groupe de deux conduits d'autosuralimentation (12) et que les moyens de transit (8A, 8B ; 108A, 108B ; 208A, 208B) alimentent symétriquement en air chaque groupe de conduits d'autosuralimentation (12).

2. Dispositif selon la revendication 1, comprenant un piston étagé (220A, 220B), caractérisé en ce que les moyens de transit (208A, 208B) et la pompe volumétrique précités sont confondus et sont intégrés au piston du cylindre associé au cylindre en phase de balayage.

3. Dispositif selon la revendication 1, caractérisé en ce que la pompe volumétrique précitée est constituée par le carter-pompe du cylindre se trouvant en phase de balayage.

4. Dispositif selon la revendication 3, caractérisé en ce que les moyens de transit (8A, 8B, ; 108A, 108B) du piston du cylindre associé communiquent par intermittence en amont avec le carter-pompe du cylindre en phase de balayage (tel que 20B; 120A) par au moins un canal de transfert (30 ; 130A, 130B) situé au-dessous du point mort bas.

5. Dispositif selon la revendication 4, caractérisé en ce que chaque canal de transfert (30) sert à alimenter en air successivement chacun des deux cylindres associés.

6. Dispositif selon l'une des revendications 3 à 5, caractérisé en ce que les moyens de transit (8A, 8B ; 108A, 108B) comprennent une chambre de transit (28A, 28B ; 128A, 128B) définie soit par une cavité (128A, 128B) interne au piston, soit par au moins un évidement (28A, 28B) réalisé dans la masse du piston entre le piston et le cylindre, reliée par intermittence en amont avec le carter-pompe et en aval avec le conduit d'autosuralimentation (12).

7. Dispositif selon la revendication 6, caractérisé en ce qu'il comprend une cavité (22A, 22B) d'alimentation en air d'admission réalisée interne au piston (tel que 20B) communiquant en amont avec l'espace sous piston (6A, 6B) défini par le carter-pompe et débouchant en aval sur la jupe du piston par une lumière (telle que 38B) ménagée dans la jupe du piston (tel que 20B), cette lumière étant mise en communication par intermittence, à travers le canal de transfert précité (30) avec les moyens de transit (tels que 8A, 8B) de l'autre piston (tel que 20A) associé, par le mouvement naturel de chaque piston dans son cylindre.

8. Dispositif selon la revendication 7, caractérisé en ce que la cavité d'alimentation précitée (22A, 22B) est réalisée annulaire sous la tête du piston, le piston comprend en outre un conduit vertical (tel que 24B) d'amenée d'air depuis l'espace sous piston (tel que 6B) ménagé interne au piston (tel que 20B) dans un secteur annulaire diamétralement opposé au canal de transfert central (30), et reliant l'espace sous piston (tel que 6B) avec la cavité précitée (22B).

9. Dispositif selon la revendication 8, caractérisé en ce que l'espace (tel que 26B) défini autour du logement de la bielle ou de la tige de piston (tel que 20B), qui s'étend avantageusement jusque sous la tête du piston, communique en aval par des lumières (telles que 40B) avec la cavité annulaire (telle que 22B) précitée s'étendant elle-même sous la tête (telle que 21B) du piston (tel que 20B).

10. Dispositif selon l'une des revendications 2 à 9, caractérisé en ce que l'ensemble de chaque groupe de deux cylindres (10A, 10B ; 210A, 210B) - piston (20A, 20B ; 220A, 220B), calés à 180°, est disposé symétriquement par rapport au plan de symétrie longitudinal passant par les axes des deux cylindres.

11. Dispositif selon l'une des revendications 4 ou 6, caractérisé en ce qu'il comprend deux canaux de transfert croisés (130A, 130B), reliant chacun en amont en permanence respectivement l'espace sous piston (106B ou 106A) avec, en aval, par intermittence, les moyens de transit (tels que 108B) du piston (tel que 120B) du cylindre associé (tel que 110B).

12. Dispositif selon l'une des revendications 2 à 11, caractérisé en ce que chaque piston (20A, 20B ; 120A, 120B ; 220A, 220B) est réalisé essentiellement parfaitement cylindrique.

13. Dispositif selon la revendication 2, caractérisé en ce que le rapport du grand diamètre (D) de chaque piston étagé (220A, 220B) à son petit diamètre (d) présente une valeur supérieure à √2.

14. Dispositif selon la revendication 2, dans lequel le moteur est équipé d'un turbo-compresseur externe, caractérisé en ce que le rapport du grand diamètre (D) de chaque piston étagé (220A, 220B) à son petit diamètre (d) est réduit à la valeur minimale nécessaire pour assurer un fonctionnement correct au démarrage et aux faibles charges.

## Claims

1. Device for supplying air to a cylinder of a two-stroke internal combustion self-supercharged engine, with at least one group of two cylinders arranged at 180°, comprising at least one selfsupercharging duct which connects the inlet ports of the two cylinders of the same group and constitutes the only path for air intake into the cylinder which is in the scavenging phase, intake air transit means being provided inside or under the piston of the associated cylinder, supplied upstream by a source of intake air at least at the moment when this piston of the associated cylinder is located at about the top dead center , whilst the transit means communicate downstream with the selfsupercharging duct, and comprising a volumetric pump defined by the natural movement of a piston between its top dead center and its bottom dead center and inversely, connected to the intake air transit means (8A, 8B ; 108A, 108B ; 208A, 208B) for the air supply thereto, characterised in that the inlet ports are arranged in the cylinder so as to be uncovered by the piston for a longer time than the exhaust ports in order to ensure a post-charging effect, in that it comprises at least one group of two selfsupercharging ducts (12), and in that the transit means (8A, 8B ; 108A, 108B ; 208A, 208B) supply symmetrically each group of selfsupercharging ducts with air (12).

2. Device according to Claim 1, comprising a stepped piston (220A, 220B), characterised in that the aforementioned transit means (208A, 208B) and the aforementioned volumetric pump are merged and integrated with the piston of the cylinder associated with the cylinder which is in the scavenging phase.

3. Device according to Claim 1, characterised in that the aforementioned volumetric pump is formed by the pump casing of the cylinder which is in the scavenging phase.

4. Device according to Claim 3, characterised in that the transit means (8A, 8B ; 108A, 108B) of the piston of the associated cylinder communicate intermittently upstream with the pump casing of the cylinder which is in the scavenging phase (such as 20B; 120A) through at least one transfer duct (30; 130A, 130B) at a position which is below the bottom dead center position.

5. Device according to Claim 4, characterised in that each transfer duct serves to supply successively each of the two associated cylinders with air.

6. Device according to one of Claims 3 to 5, characterised in that the transit means (8A, 8B ; 108A, 108B) comprise a transit chamber (28A, 28B ; 128A, 128B) defined either by an internal cavity (128A, 128B) in the piston or by at least one recess (28A, 28B) formed in the mass of the piston between the piston and the cylinder, connected intermittently upstream to the pump casing and downstream to the selfsupercharging duct (12).

7. Device according to Claim 6, characterised in that it comprises an intake air supply cavity (22A, 22B) provided internally in the piston (such as 20B) communicating upstream with the space below the piston (6A, 6B) defined by the pump casing and opening downstream onto the piston skirt via a port (such as 38B) provided in the skirt of the piston (such as 20B), this port being made to communicate intermittently , through the aforementioned transfer duct (30), with the transit means (such as 8A, 8B) of the other associated piston (such as 20A) by the natural movement of each piston in its cylinder.

8. Device according to Claim 7, characterised in that the aforementioned supply cavity (22A, 22B) is made annular below the piston head, and the piston also comprises a vertical air supply duct (such as 24B) from the space below the piston (such as 6B) provided internally in the piston (such as 20B) in an annular sector diametrally opposed to the central transfer duct (30), and connecting the space below the piston (such as 6B) with the aforementioned cavity (22B).

9. Device according to Claim 8, characterised in that the space (such as 26B) defined around the housing of the connecting rod (such as 20B) which avantageously extends to below the piston head communicates downstream via ports (such as 40B) with the aforementioned annular cavity (such as 22B) which itself extends below the head (such as 21B) of the piston (such as 20B).

10. Device according to one of Claims 2 to 9, characterised in that the assembly of each group of two cylinders (10A, 10B ; 210A, 210B) - pistons (20A, 20B ; 220A, 220B) set at 180° is arranged symmetrically with respect to the longitudinal plane of symmetry passing through the axes of the two cylinders.

11. Device according to one of Claims 4 or 6, characterised in that it comprises two crossed transfer ducts (130A, 130B) each of which permanently connects, upstream, respectively the space below the piston (106B or 106A) with, downstream, intermittently, the transit means (such as 108B) of the piston (such as 120B) of the associated cylinder (such as 110B).

12. Device according to one of Claims 2 to 11, characterised in that each piston (20A, 20B ; 120A, 120B ; 220A, 220B) is essentially made perfectly cylindrical.

13. Device according to Claim 2, characterised in that the ratio of the large diameter (D) of each stepped piston (220A, 220B) to its small diameter (d) is a value greater than √2.

14. Device according to Claim 2, in which the engine is equipped with an external turbocharger, characterised in that the ratio of the large diameter (D) of each stepped piston (220A, 220B) to its small diameter (d) is reduced to the minimum value necessary in order to ensure correct operation on starting and at low loads.

## Patentansprüche

1. Vorrichtung zur Lufteinspeisung in einen Zylinder eines Zweitakt-Verbrennungsmotors mit mindestens einer Gruppe von zwei um 180° taktverschobenen Zylindern und Selbstaufladung, mit mindestens einem Selbstaufladekanal, der die Einlaßschlitze der beiden Zylinder einer Gruppe verbindet und den einzigen Weg für den Lufteinlaß in den in der Spülphase befindlichen Zylinder darstellt, wobei im Inneren oder unter dem Kolben des dazugehörigen Zylinders Einrichtungen vorgesehen sind, durch die die Einlaßluft hindurchströmt und die mindestens in dem Moment, in dem sich dieser Kolben des dazugehörigen Zylinders nahe dem oberen Totpunkt befindet, stromaufwärts von einer Einlaßluftquelle gespeist werden, während sie stromabwärts mit dem Selbstaufladekanal in Verbindung stehen, mit einer Verdrängerpumpe, die durch die natürliche Bewegung eines Kolbens zwischen seinem oberen und seinem unteren Totpunkt und umgekehrt gebildet wird und mit den Einrichtungen, durch die die Einlaßluft hindurchströmt (8A, 8B; 108A, 108B; 208A, 208B), verbunden ist, um ihnen Luft zuzuführen, dadurch gekennzeichnet, daß die Einlaßschlitze im Zylinder so angeordnet sind, daß sie vom Kolben länger freigegeben werden als die Auslaßschlitze, um eine Nachfüllwirkung sicherzustellen, daß die Vorrichtung mindestens eine Gruppe von zwei Selbstaufladekanälen (12) aufweist und die Durchströmeinrichtungen (8A, 8B; 108A, 108B; 208A, 208B) jeder Gruppe von Selbstaufladekanälen (12) symmetrisch Luft zuführen.

2. Vorrichtung nach Anspruch 1 mit einem Stufenkolben (220A, 220B), dadurch gekennzeichnet, daß die vorgenannten Durchströmeinrichtungen (208A, 208B) und die vorgenannte Verdrängerpumpe ineinander übergehen und in den Kolben des dem Zylinder in der Spülphase zugeordneten Zylinders integriert sind.

3. Vorrichtung nach Anspruch 1, dadurch gekennzeichnet, daß die vorgenannte Verdrängerpumpe durch die Kurbelgehäuse-Pumpe des in der Spülphase befindlichen Zylinders gebildet wird.

4. Vorrichtung nach Anspruch 3, dadurch gekennzeichnet, daß die Durchströmeinrichtungen (8A, 8B; 108A, 108B) des Kolbens des dazugehörigen Zylinders über mindestens einen unterhalb des unteren Totpunkts angeordneten Überströmkanal (30; 130A, 130B) stromaufwärts intermittierend mit der Kurbelgehäuse-Pumpe des Zylinders in der Spülphase (wie 20B; 120A) in Verbindung stehen.

5. Vorrichtung nach Anspruch 4, dadurch gekennzeichnet, daß jeder Überströmkanal (30) dazu dient, den beiden dazugehörigen Zylindern nacheinander Luft zuzuführen.

6. Vorrichtung nach einem der Ansprüche 3 bis 5, dadurch gekennzeichnet, daß zu den Durchströmeinrichtungen (8A, 8B; 108A, 108B) eine Durchströmkammer gehört (28A, 28B; 128 A, 128B), die entweder durch einen kolbeninternen Hohlraum (128A, 128B) oder durch mindestens eine aus dem Vollen des Kolbens herausgearbeitete Aussparung (28A, 28B) zwischen dem Kolben und dem Zylinder gebildet wird und stromaufwärts intermittierend mit der Kurbelgehäuse-Pumpe und stromabwärts mit dem Selbstaufladekanal (12) verbunden ist.

7. Vorrichtung nach Anspruch 6, dadurch gekennzeichnet, daß sie im Inneren des Kolbens (wie 20B) einen Hohlraum (22A, 22B) für die Zuführung der Einlaßluft aufweist, welcher stromaufwärts mit dem durch die Kurbelgehäuse-Pumpe gebildeten Raum unter dem Kolben (6A, 6B) in Verbindung steht und stromabwärts durch einen Schlitz (wie 38B) im Kolbenmantel (wie 20B) in diesen mündet, wobei dieser Schlitz über den vorgenannten Überströmkanal (30) durch die natürliche Bewegung jedes Kolbens in seinem Zylinder intermittierend mit den Durchströmeinrichtungen (wie 8A, 8B) des anderen dazugehörigen Kolbens (wie 20A) in Verbindung gebracht wird.

8. Vorrichtung nach Anspruch 7, dadurch gekennzeichnet, daß der vorgenannte Hohlraum für die Luftzuführung (22A, 22B) ringförmig unter dem Kolbenboden ausgebildet ist und der Kolben außerdem einen senkrechten Kanal (wie 24B) für die Luftzufuhr vom Raum unter dem Kolben (wie 6B) aufweist, der im Inneren des Kolbens (wie 20B) in einem dem mittigen Überströmkanal (30) diametral gegenüberliegenden ringförmigen Sektor ausgeführt ist und den Raum unter dem Kolben (wie 6B) mit dem vorgenannten Hohlraum (22B) verbindet.

9. Vorrichtung nach Anspruch 8, dadurch gekennzeichnet, daß der Raum (wie 26B) um die Lagerung der Pleuel- oder Kolbenstange (wie 20B) herum, der sich vorteilhafterweise bis unter den Kolbenboden erstreckt, stromabwärts durch Schlitze (wie 40B) mit dem vorgenannten ringförmigen Hohlraum (wie 22B), der sich seinerseits unter dem Boden (wie 21B) des Kolbens (wie 20B) erstreckt, in Verbindung steht.

10. Vorrichtung nach einem der Ansprüche 2 bis 9, dadurch gekennzeichnet, daß die Einheit aus jeder Gruppe von zwei um 180° taktverschobenen Zylindern (10A, 10B; 210A, 210B) und Kolben (20A, 20B; 220A, 220B) symmetrisch bezüglich einer Längssymmetrieebene angeordnet ist, die durch die Achsen der beiden Zylinder geht.

11. Vorrichtung nach einem der Ansprüche 4 oder 6, dadurch gekennzeichnet, daß sie zwei überkreuz angeordenete Überströmkanäle (130A, 130B) aufweist, die beide stromaufwärts ununterbrochen den Raum unter dem Kolben (106B bzw. 106A) mit stromabwärts intermittierend den Durchströmeinrichtungen (wie 108B) des Kolbens (wie 120B) des dazugehörigen Zylinders (wie 110B) verbinden.

12. Vorrichtung nach einem der Ansprüche 2 bis 11, dadurch gekennzeichnet, daß jeder Kolben (20A, 20B; 120A, 120B; 220A; 220B) im wesentlichen vollkommen zylindrisch ausgeführt ist.

13. Vorrichtung nach Anspruch 2, dadurch gekennzeichnet, daß bei jedem Stufenkolben (220A, 220B) das Verhältnis seines großen Durchmessers (D) zu seinem kleinen Durchmesser (d) größer ist als √2.

14. Vorrichtung nach Anspruch 2, bei der der Motor mit einem externen Turbokompressor ausgestattet ist, dadurch gekennzeichnet, daß bei jedem Stufenkolben (220A, 220B) das Verhältnis seines großen Durchmessers (D) zu seinem kleinem Durchmesser (d) auf den kleinstmöglichen, zur Erzielung eines einwandfreien Laufs beim Anlassen und im Schwachlastbereich erforderlichen Wert reduziert ist.
